# EUROPEAN PATENT APPLICATION

(11) **EP 4 741 553 A1**
(43) Date of publication of application: **13.05.2026**
(21) Application number: 24211716.6
(22) Date of filing: 08.11.2024
(51) Int. Cl.: D04H 1/425, B32B 5/02, B32B 5/26, B32B 5/28, B65B 29/02, B65D 65/46, B65D 85/804, D04H 1/435, D04H 1/4374, D04H 1/60, D04H 1/00, D04H 1/732

(54) **METHOD OF PRODUCING A BIODEGRADABLE THREE-DIMENSIONALLY SHAPED PRODUCT, AND BIODEGRADABLE THREE-DIMENSIONALLY SHAPED PRODUCT OBTAINABLE BY THE METHOD**

(71) Applicant: Glatfelter Gernsbach GmbH, 76593 Gernsbach (DE)
(72) Inventor: Lutter, Stefanie, 16909 WITTSTOCK (DE); Ladanji, Dijana, 76593 GERNSBACH (DE); Seger, Bernd, 76332 BAD HERRENALB (DE); Borner, Sebastian, 76332 BAD HERRENALB (DE); Kühn, Jörg, 76470 ÖTIGHEIM (DE)
(74) Representative: Lavoix

(57) **Abstract**

The present invention relates to a method for producing a three-dimensionally shaped product, the method comprising the steps of providing a carrier layer, providing a non-woven air-laid material on the carrier layer to give a layer structure comprising the carrier layer and a layer of the non-woven air-laid material, applying an additive to the layer structure, and molding the layer structure. The present invention relates to a three-dimensionally shaped product comprising a layer structure comprising a carrier, a non-woven air-laid material comprising fibers, and an additive in and/or on the layer structure.

## Description

### FIELD OF THE INVENTION

The present invention relates to the field of three-dimensionally (3D) shaped products, which are in particular biodegradable or compostable. More specifically, the present invention relates to a method for producing a (biodegradable) three-dimensionally shaped product and a (biodegradable) three-dimensionally shaped product, which may be obtainable by the method.

### BACKGROUND

With growing awareness of the environment and man-made climate change, the use of single-use plastic objects and products has come under increasing scrutiny. Despite these concerns, the use of these objects and products has grown dramatically with new lifestyle trends and consumer habits over the last years, such as the trend of consumption of food "to-go", typically involving single-serving disposable food container and cutlery. Likewise, the persisting popularity of single-use capsules for preparing hot beverages, in particular coffee, which are conventionally made from aluminum or plastic material, poses severe ecological problems. During the last years, the environmental aspect of the end-of-life of single use consumer goods became more and more important for the general public, as well as for brand owners and legislative bodies. Therefore, it became more and more important for brand owners to offer more sustainable product ranges, allowing customers to minimize their environmental footprint.

Previous attempts in this regard include the following: US 2011/0259205 A1 proposes a capsule system comprising a paper-based wall with wax coating to form a biodegradable alternative for single use beverage pods. US 8656827 B2 proposes a capsule system which is not harmful for the environment and employs compostable materials, such as polylactic acid (PLA). WO 2008/148650 A1 outlines a coffee capsule system based on polypropylene (PP) and an EVOH gas barrier layer. US 2018/0362198 A1 proposes a capsule system employing a bicomponent PLA fiber to be used in a non-woven filter for coffee and tea applications. EP 3221238 B1 proposes a capsule system based on a cellulose based capsule body and a sealing film made of edible material containing alginic acid/alginate. US 2023/0256702 A1 discloses a 3D shaped product that is formed by hot pressing of an air-laid blank comprising natural fibers and a thermoplastic polymer binder and that is recyclable in a repulping process.

However, previous attempts have so far not been fully satisfying concerning a substantially complete biodegradability and at the same time enabling various characteristics as required depending on the type of product.

Thus, there is still room for further improvements in providing a biodegradable three-dimensionally shaped product.

### OBJECT OF THE INVENTION

The present invention aims at overcoming the above described problems and drawbacks. Thus, it is an object of the present invention to provide a three-dimensionally shaped product that can substantially entirely biodegrade after use and at the same time enabling various characteristics, such as barrier properties (in particular oxygen, aroma, water vapor and/or liquid barrier), hot water resistance, pressure resistance, bending stiffness (in wet, dry, and hot wet environment), mouthfeel and/or haptic, as required depending on the type of product.

### SUMMARY OF THE INVENTION

The present inventors have made diligent studies and have found that this object can be solved by a layer structure comprising a carrier layer and a layer of non-woven air-laid material, to which layer structure an additive is applied and the layer structure is molded, such as by hot pressing, to the desired three-dimensionally shape. The inventors have in particular found that the additive or a combination of different additives (i) may support the 3D molding, (ii) may impart the product with desired surface properties, such as hydrophobicity, and/or (iii) may impart the product with desired mechanical properties, such as strength.

Accordingly, the present invention relates to a method for producing a (biodegradable, compostable) three-dimensionally (3D) shaped product, the method comprising the steps of providing a carrier layer, providing (such as applying) a non-woven air-laid material on the carrier layer to give a layer structure comprising the carrier layer and (a layer of) the non-woven air-laid material, applying an additive to (e.g. into and/or onto) the layer structure, and (dry) molding (e.g. hot pressing) the layer structure (to give the three-dimensionally shaped product).

The present invention further relates to a (biodegradable, compostable) (single-use, single-serving, disposable) three-dimensionally (3D) shaped product obtainable (e.g. obtained) by a method as described herein.

Moreover, the present invention relates to a (biodegradable, compostable) (single-use, single-serving, disposable) three-dimensionally (3D) shaped product (e.g. obtainable by dry molding of a layer structure comprising a carrier layer and (a layer of) a non-woven air-laid material), comprising a layer structure comprising a carrier layer (comprising fibers) and a non-woven air-laid material comprising fibers, and an additive in and/or on the layer structure, in particular in and/or on the carrier layer and/or in and/or on the non-woven air-laid material.

Other objects and many of the attendant advantages of embodiments of the present invention will be readily appreciated and become better understood by reference to the following detailed description of embodiments and the accompanying drawings.

### BRIEF DESCRIPTION OF THE DRAWINGS

Fig. 1 schematically illustrates an equipment for preparing a layer structure by applying a non-woven air-laid material on a carrier layer and applying an additive according to an exemplary embodiment.
Figs. 2A and 2B schematically illustrate a one-step molding process and the resulting three-dimensionally shaped product according to an exemplary embodiment.
Figs. 3A to 3C schematically illustrate a two-step molding process according to an exemplary embodiment.
Figs. 4A to 4E schematically illustrate a multi-step molding process according to an exemplary embodiment.

### DETAILLED DESCRIPTION OF THE INVENTION

Hereinafter, details of the present invention and other features and advantages thereof will be described. However, the present invention is not limited to the following specific descriptions, but they are rather for illustrative purposes only.

It should be noted that features described in connection with one exemplary embodiment or exemplary aspect may be combined with any other exemplary embodiment or exemplary aspect, in particular features described with any exemplary embodiment of a method for producing a three-dimensionally shaped product may be combined with any other exemplary embodiment of a method for producing a three-dimensionally shaped product, with any exemplary embodiment of a three-dimensionally shaped product and vice versa, unless specifically stated otherwise.

Where an indefinite or definite article is used when referring to a singular term, such as "a", "an" or "the", a plural of that term is also included and vice versa, unless specifically stated otherwise, whereas the word "one" or the number "1", as used herein, typically means "just one" or "exactly one".

The expression "comprising", as used herein, includes not only the meaning of "comprising", "including" or "containing", but may also encompass "consisting essentially of" and "consisting of".

In a first aspect, the present invention relates to a method for producing a three-dimensionally shaped product, in particular a biodegradable three-dimensionally shaped product.

The term "three-dimensionally shaped", as used herein, may in particular mean that the product or article extends to a certain degree into all three spatial dimensions, rather than in only two dimensions like a flat article.

The term "biodegradable" which may also be referred to as "compostable", as used herein, may in particular mean that the material concerned, such as the fibers, the particles or powder, the polymer or the entire three-dimensionally shaped product, complies at least with the requirements for industrial compostability, for instance in accordance with at least one of EN 13432, EN 14995, ASTM D5988-18, ASTM D6400-19 and ASTM D6868-19, and preferably also with the requirements for home compostability, for instance in accordance with draft prEN 17427, and may preferably also be marine biodegradable, for instance in accordance with ASTM D6691-17.

In an embodiment, the three-dimensionally shaped product is selected from the group consisting of a (food) container, such as tea or coffee capsules, cutlery, such as spoons, and planter, such as plant pots. Thus, the three-dimensionally shaped product may adopt various shapes and may serve various purposes. Depending on the type of product or its application, various (different) characteristics may be required. For instance, if the three-dimensionally shaped product represents a tea or coffee capsule, it is typically relevant that the three-dimensionally shaped product, in particular the material thereof, exhibits excellent barrier properties (in particular in terms of oxygen, aroma, water vapor and/or liquid barrier), home compostability, hot water (up to 95 °C) resistance and/or pressure (up to 10 - 20 bar) resistance. If the three-dimensionally shaped product represents a piece of cutlery, such as a spoon, it is typically relevant that the three-dimensionally shaped product, in particular the material thereof, exhibits an appropriate bending stiffness (in wet, dry, and hot wet environment), home compostability, mouthfeel and/or haptic. If the three-dimensionally shaped product represents a planter, such as a plant pot, it is typically relevant that the biodegradability the material of the three-dimensionally shaped product is adapted to a natural environment, and that the three-dimensionally shaped product is permeable to water and/or plant roots. All these various and diverse characteristics may be implemented according to an embodiment of the present invention by appropriate selection of a suitable additive and/or application technique of the additive, as will be discussed in further detail below.

The method for producing a three-dimensionally shaped product comprises a step of providing a carrier layer. The term "carrier layer", as used herein, may in particular mean a layer (e.g. a non-woven) that may carry or support (a layer of) a non-woven air-laid material provided on the carrier layer. For instance, the carrier layer may be configured to enable applying a non-woven air-laid material on it such that a layer structure comprising the carrier layer and (a layer of) the non-woven air-laid material can be obtained.

In an embodiment, the carrier layer comprises fibers, in particular fibers selected from the group consisting of softwood fibers, hardwood fibers, biopolymer fibers, in particular biodegradable polyester fibers, such as polylactic acid (PLA) fibers, polyhydroxyalkanoate (PHA) fibers, thermoplastic starch (TPS) fibers or cellulose acetate (CA) fibers, and blends thereof.

In an embodiment, the carrier layer comprises at least one non-woven (fiber web) selected from the group consisting of a spunlaced non-woven, a meltblown non-woven and a spunbonded non-woven. In other words, the carrier layer may be prepared by a spunlace process, a meltblown process and/or a spunbond process. Thus, the step of providing a carrier layer may comprise a spunlace process, a meltblown process and/or a spunbond process. More generally, the step of providing a carrier layer may comprise a meltextrusion process, such as a meltblown process and/or a spunbond process.

The term "spunlaced non-woven", as used herein, may in particular mean a non-woven prepared by a spunlace process. The term "spunlace process", as used herein, may in particular denote a process, in which fibers are entangled by means of water jets. The term "entangled" may in particular denote a state of being at least partly intertwined, in particular to impart strength, such as tear strength or tensile strength, to the non-woven fabric. The spunlace process may be a bonding process for wet or dry fibrous webs, where fine, high-pressure jets of water penetrate the fibrous web and cause an entanglement of the fibers. Thereby, fabric integrity may be provided or improved. Spunlacing is sometimes also referred to as "hydroentanglement". The spunlace process may be combined with a meltextrusion process, in particular a meltblown process and/or a spunbond process, but may also be combined with an air-laid process and/or a wet-laid process.

The term "meltextrustion process", as used herein, may in particular denote any process by which a fiber raw material is melted in order to extrude fibers therefrom. The basic spinning process of meltextrusion nonwovens, in particular spunbonded and meltblown non-wovens, may include a process with at least some of the following steps: that the polymer is melted into spinning melt, ejected from a spinneret hole at a certain temperature and pressure, cooled and drawn into filamentous fibers, then divided and laid on a belt or netting device, and consolidated into non-wovens. In view of this procedure, meltextrusion processes may also be referred to as "meltspinning processes". An advantage of using meltextrusion or meltspinning processes may be that a solvent may not be needed in the spinning process ensuring a high purity of the spun fiber material.

The term "meltblown non-woven", as used herein, may in particular mean a non-woven prepared by a meltblown process. The term "meltblown process", as used herein, may in particular denote an extrusion of melted fibers through a spin net or die to form long thin fibers. As they fall from the spin net or die, the fibers may be stretched and cooled by passing hot air over them. By means of hot, fast-flowing air the fibers may be directly blown onto a moving substrate such as a moving belt, creating a self-bonded web. The hot air temperature may be close to the melting temperature of the fiber material. A meltblown process may be advantageous, because extremely fine fibers may be produced, in particular the fibers may be more fine than those resulting from a spunbond process. The fiber diameter may be a magnitude lower compared to the spunbond process. Due to the fine fibers, meltblown layers or non-wovens may have advantageous filtering characteristics, e.g. being able to capture very fine particles.

The term "spunbonded non-woven", as used herein, may in particular mean a non-woven prepared by a spunbond process. The term "spunbond process" which may also be referred to as "spunlaid process", as used herein, may in particular denote a process, in which fibers or filaments, which may be substantially endless, are spun from a molten mass or solution, i.e. the molten fiber raw material, and are then directly dispersed into a web by deflectors and/or air streams. A difference between the spunbond process and the meltblown process may be that in the spunbond process the hot air flow is at a cross flow to the emerging fiber, whereas in the melt-blown process hot air converges with the fiber as it emerges from the die. A spunbond process may be advantageous, because fibers with substantial intrinsic strength may be produced, in particular the intrinsic strength may be larger than in the case of meltblown fibers. Thus, spunbond non-wovens may be stronger than corresponding meltblown non-wovens and may even serve as support for meltblown non-wovens.

The terms "non-woven", "non-woven web" and "non-woven fabric", as used herein, may in particular mean a web of individual fibers which are at least partially intertwined, but not in a regular manner as in a knitted or woven fabric.

The method for producing a three-dimensionally shaped product further comprises a step of providing (such as applying) a non-woven air-laid material on the carrier layer to give a layer structure comprising the carrier layer and (a layer of) the non-woven air-laid material.

In an embodiment, the step of providing a non-woven air-laid material on the carrier layer comprises air-laying a fiber composition on the carrier layer. In other words, the non-woven air-laid material may be prepared by an air-lay process. Thus, the step of providing a non-woven air-laid material may comprise an air-lay process.

The term "air-lay process" which may also be referred to as "air-laid process", as used herein, may in particular denote a process, in which a gas, in particular air, is used as a carrying medium for the fibers. Thus, the fibers may be arranged by the gas to form the non-woven web. Conventional air-laid processes are described for instance in US 3,905,864 and WO 98/28480, the disclosures of which are incorporated herein by reference.

In an embodiment, the fiber composition comprises cellulosic pulp fibers and/or biopolymer fibers.

Suitable examples of the cellulosic pulp fibers include softwood fibers, hardwood fibers, specialty fibers and blends thereof. The cellulosic pulp fibers may in particular comprise wood pulp fibers, such as softwood and/or hardwood pulp. Wood pulp may in particular denote a (lignocellulosic) fibrous material prepared by chemically or mechanically separating cellulose fibers from wood, such as by a kraft process (sulfate process). Kraft wood pulp may include northern bleached softwood kraft (NBSK) and southern bleached softwood kraft (SBSK) as well as their unbleached variants. The cellulosic pulp fibers may also comprise specialty (pulp) fibers. The term "specialty pulp fibers" or "specialty fibers", as used herein, may in particular denote fibers obtained from annual plants and may include hemp fibers, manila fibers, jute fibers, sisal fibers, abaca fibers, kenaf fibers, bamboo fibers, sugar cane fibers or combinations thereof. The specialty (pulp) fibers may in particular comprise abaca fibers, kenaf fibers, bamboo fibers or sugar cane fibers. Thus, the cellulosic pulp fibers are preferably natural pulp fibers. The cellulosic pulp fibers, such as wood pulp and/or specialty pulp fibers, may have a fiber coarseness of from 0.3 to 3.5 dtex, such as from 0.6 to 2.5 dtex. The cellulosic pulp fibers, in particular the aforementioned examples of cellulosic pulp fibers, may also be pretreated with hydrophobic, hydrophilic, oleophilic, lipophilic and/or oleophobic agents.

Suitable examples of the biopolymer fibers include polylactic acid (PLA) fibers, polyhydroxyalkanoate (PHA) fibers, polybutylene succinate (PBS) fibers, polybutylene adipate terephthalate (PBAT) fibers, polycaprolactone (PCL) fibers, cellulose derivative fibers, such as cellulose acetate (CA) fibers, and blends thereof.

The term "biopolymer", as used herein, may in particular denote a polymer that can be derived from material of biological or natural origin, in particular from plants or other renewable entities, rather than fossil sources, and/or which is generally biodegradable. Thus, a biopolymer may comprise (and thus also be referred to as) a biobased polymer and/or a biodegradable polymer. Suitable examples for a biopolymer, as used herein, include polylactic acid (PLA), polyhydroxyalkanoate (PHA), polybutylene succinate (PBS), polybutylene adipate terephthalate (PBAT), polycaprolactone (PCL) and cellulose acetate (CA).

The term "biobased" (which may also be referred to as "bio-derived" or as "natural"), as used herein, may in particular mean that the material concerned, such as the fibers, the particles or powder, the polymer or the entire three-dimensionally shaped product, can be derived from material of biological or natural origin, in particular from plants or other renewable entities, rather than fossil sources.

The biopolymer fibers may in particular comprise thermoplastic biodegradable fibers. The term "thermoplastic biodegradable fibers", as used herein, may in particular denote biodegradable fibers that soften and/or partly and/or fully melt when exposed to heat and are capable to bind with each other or to other non-thermoplastic fibers, such as cellulosic fibers or pulp fibers, upon cooling and resolidifying. For example, the thermoplastic biodegradable fiber may be selected from the group consisting of a polylactic acid (PLA), a polybutylene succinate (PBS), a polybutylene adipate terephthalate (PBAT), a polyhydroxyalkanoate (PHA) and copolymers of PHA, and other fibers made of biodegradable thermoplastic polymers. Combinations of two or more thereof may also be applied. In an embodiment, the thermoplastic biodegradable fiber comprises polylactic acid (PLA) fibers. When using thermoplastic biodegradable fibers, sealability properties, in particular heat-sealability, may be provided which may may improve the integrity and mechanical strength of the layer structure.

The layer structure comprises at least two different (separate, distinct) layers, which may be distinguished from each other, for instance visually by means of a microscope in a cross-sectional view of the layer structure. The layer structure may in particular comprise a carrier layer and a layer of a non-woven air-laid material. The layer structure may comprise one or more further layers or films, in particular on the layer of a non-woven air-laid material and/or on the carrier layer, but also between the carrier layer and the layer of a non-woven air-laid material. It is also possible that the layer structure comprises two or more carrier layers and/or two or more layers of a non-woven air-laid material. The layer structure may in particular represent a multilayer structure, for instance comprising 2 to 5 layers, i.e. 2, 3, 4 or 5 layers

In an embodiment, the individual layers of the layer structure may have a grammage or basis weight as described below. The grammage or basis weight may be determined in accordance with TAPPI T 410 (om-19).

The carrier layer may have a basis weight in a range of from 10 to 100 g/m², in particular from 15 to 80 g/m², such as from 20 to 60 g/m².

The (layer of) non-woven air-laid material may have a basis weight in a range of from 30 to 1500 g/m², in particular from 50 to 1000 g/m², such as from 100 to 500 g/m².

The entire layer structure may have a basis weight of from 40 to 2000 g/m², in particular from 75 to 1500 g/m², such as from 150 to 1000 g/m².

In an embodiment, the layer structure, in particular the non-woven air-laid material, has a moisture (or water content) of less than 10 %, in particular less than 5 %, in particular less than 1 %, before the step of applying an additive to the layer structure. By taking this measure, a blistering of the non-woven air-laid material may be avoided or at least suppressed in a subsequent molding (such as hot pressing) step, which blistering may otherwise in particular occur if the non-woven air-laid material has been imparted with hydrophobic properties, such as by means of fibers that have been pretreated with hydrophobic, lipophilic and/or oleophobic agents in order to achieve water (vapor) barrier characteristics, or by applying a hydrophobic agent after formation of the layer structure. The term "hydrophobic agent" (or similarly "lipophilic agent" and/or "oleophilic agent"), as used herein, may in particular denote an agent that increases the hydrophobicity and may thus impart water-repelling properties and/or enhance barrier properties with regard to water vapor. The moisture of the non-woven air-laid material or the entire layer structure may be determined in accordance with DIN ISO 287.

The method for producing a three-dimensionally shaped product further comprises a step of applying an additive to (e.g. into and/or onto) the layer structure. The additive may be applied into the layer structure, for instance into the (layer of) the non-woven air-laid material and/or into the carrier layer, such as by blending the additive into the fiber composition used for providing the respective layer. In addition or alternatively, the additive may be applied on or onto the layer structure, for instance on or onto the (layer of) the non-woven air-laid material and/or on or onto the carrier layer, such as by spraying and/or coating a dispersion or solution comprising the additive on at least one side of the layer structure or applying a film comprising the additive on at least one side of the layer structure. It is also possible to apply more than one additive, for instance to different positions of the layer structure (e.g. applying an additive into the layer structure and applying the same or another additive onto at least one side of the layer structure, or applying two (same or different) additives on a respective side of the layer structure) and/or by different application techniques, such as spraying, coating, casting, dry impregnating, blending, laminating and extruding. Of course, it is also possible to apply more than one additive at the same position of the layer structure and/or by the same application technique.

In an embodiment, the additive is applied to the layer structure before molding the layer structure. For instance, the additive may be added to the fiber composition used for providing the layer structure, in particular the carrier layer and/or the non-woven air-laid material. Moreover, the additive may be applied as a solution or dispersion after forming the layer structure comprising a carrier layer and a layer of non-woven air-laid material, but before molding the layer structure. Likewise, a film comprising an additive may be laminated on at least one side of the layer structure before molding the layer structure.

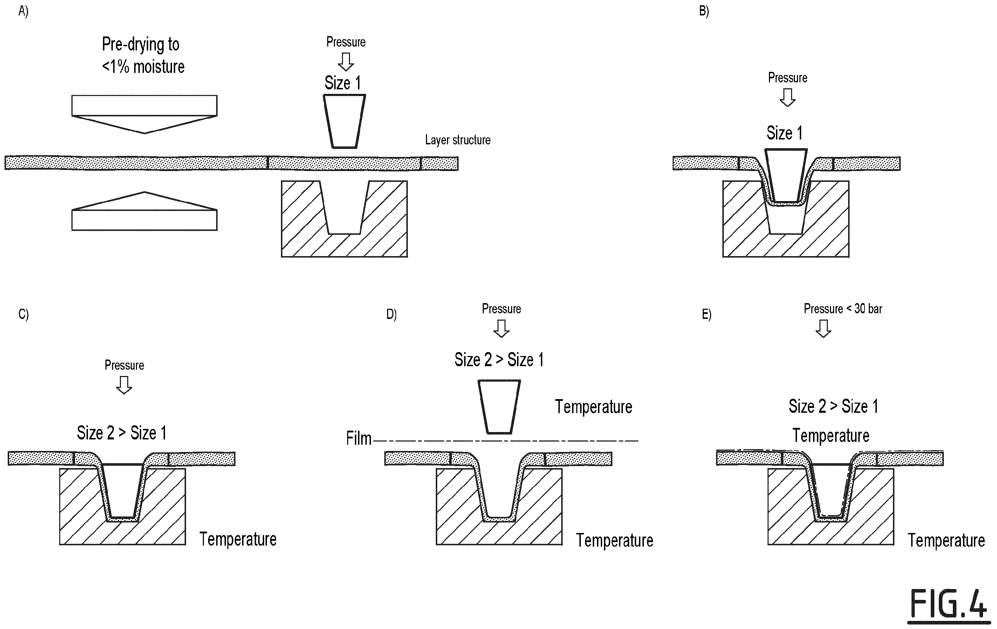

In another embodiment, the additive is applied to the layer structure after molding the layer structure. As an example, a film comprising an additive may be provided on at least one side of the layer structure after molding the layer structure, as shown for instance in Fig. 4, in particular Fig. 4D.

It is also possible to apply an additive to the layer structure before molding the layer structure and to apply another or the same additive to the layer structure after molding the layer structure.

In an embodiment, the additive is applied as at least one of a dispersion, a solution, a (dry) powder, a (biopolymer) film and a (biopolymer) fiber. Thus, the additive may be applied in the form of a dispersion (such as a composition of solid particles in a liquid, e.g. water), a solution, a powder (in particular a dry powder), a film (such as a film comprising or consisting of a biopolymer) and/or a fiber (such as a fiber comprising or consisting of a biopolymer).

In an embodiment, the step of applying an additive to the layer structure comprises at least one of spraying, coating, casting, applying by a size press, dry impregnating, blending, laminating and (direct) extruding. Thus, the additive may be applied by at least one of spraying, coating, casting, a size press, dry impregnating, blending, laminating and/or extrusion (in particular direct extrusion)

In an embodiment, the step of applying an additive to the layer structure comprises at least one of the following:
- spraying and/or coating a dispersion or solution comprising the additive on at least one side of the layer structure (the dispersion or solution may be applied before or after the step of molding),
- dry impregnating the layer structure, in particular the carrier layer and/or the non-woven air-laid material, with a (dry) powder comprising the additive (the powder may be applied before or after the step of molding),
- applying (laminating or (direct) extruding) a (biopolymer) film comprising the additive on at least one side of the layer structure (the film may be applied before or after the step of molding; the film may have a thickness in the range of from 10 to 120 µm, such as from 20 to 100 µm),
- adding (blending) a (biopolymer, thermoplastic and/or heatsealable) fiber (as the additive) to a fiber composition (mixture) used for providing the layer structure, in particular the carrier layer and/or the non-woven air-laid material.

In an embodiment, the dispersion comprises water and further comprises at least one of biopolymer particles, cellulosic particles and cellulose derivatives. In an embodiment, the biopolymer particles, the cellulosic particles and/or the cellulose derivatives may have a particle size of from 1 µm to 50 µm, such as from 5 µm to 25 µm.

In an embodiment, the biopolymer particles may comprise polylactic acid (PLA), polyhydroxyalkanoate (PHA), polybutylene succinate (PBS), polybutylene adipate terephthalate (PBAT), polycaprolactone (PCL), cellulose acetate (CA) and combinations thereof.

In an embodiment, the cellulosic particles may comprise highly beaten cellulosic particles, in particular cellulosic particles having a (Schopper Riegler) freeness value (which may also be referred to as a drainage index or beating degree) of from 60 to 95 °SR, such as from 65 to 90 °SR. Conventional refining equipment, such as beaters, conical or disk refiners, may be used to adapt the drainage index to the desired value. The freeness value may be determined in accordance with DIN ISO 5267-1. The cellulosic particles, in particular in case of highly beaten cellulosic particles, may further be crosslinked by a crosslinkling agent, such as polyamido-amine epichlorohydrin (PAAE), and/or a polyvalent (carboxylic) acid, such as citric acid.

The term "cellulose derivatives", as used herein, may in particular denote chemically modified (for instance methylated, ethylated, hydroxypropylated, acetylated and/or carboxylated) cellulose compounds, and may in particular include cellulose ethers and cellulose esters, such as methylcellulose, ethylcellulose, hydroxyethyl cellulose, hydroxypropyl cellulose, hydroxypropyl methylcellulose, carboxymethyl cellulose or cellulose acetate. In particular, the cellulose derivatives may comprise at least one of cellulose acetate (CA), hydroxypropyl methylcellulose (HPMC) and methylcellulose (MC). The cellulose derivatives may also be crosslinked by a crosslinkling agent, such as polyamido-amine epichlorohydrin (PAAE), and/or a polyvalent (carboxylic) acid, such as citric acid.

In an embodiment, the dispersion comprises water and further comprises a hydrophobic agent (hydrophobicity-imparting agent), such as a wax, an alkyl ketene dimer (AKD) and lignin. The inventors have found that it might be advantageous for the molding step to apply a hydrophobic agent as a dispersion to the already formed layer structure (before or after the molding step), compared with pretreating the fibers with a hydrophobic agent.

In an embodiment, the solution comprises at least one of polyamido-amine epichlorohydrin (PAAE), carboxymethyl cellulose (CMC), starch and a polyvalent (carboxylic) acid (in particular a divalent acid or a trivalent acid, such as citric acid).

In an embodiment, the (dry) powder (used for dry impregnating) comprises at least one of carboxymethyl cellulose (CMC), starch, lignin, alginate, microfibrillated cellulose (MFC), biopolymer (such as PLA, PHA, PCL,PBS, CA). The dry powder may also be crosslinked by a crosslinkling agent. In particular, CMC can be mixed with a polyvalent acid, such as citric acid, to crosslink the CMC.

In an embodiment, the additive is selected from the group consisting of a biopolymer (particles or fibers) (such as polylactic acid (PLA), polyhydroxyalkanoate (PHA), polybutylene succinate (PBS), polybutylene adipate terephthalate (PBAT), polycaprolactone (PCL) and cellulose acetate (CA)), cellulose (in particular cellulosic fibers), cellulose derivative, polyamido-amine epichlorohydrin (PAAE), carboxymethyl cellulose (CMC), starch, lignin, alginate, microfibrillated cellulose, polyvalent (carboxylic) acid (in particular a divalent acid or a trivalent acid, such as citric acid) and combinations thereof.

The method for producing a three-dimensionally shaped product further comprises a step of molding the layer structure (to give the three-dimensionally shaped product). The step of molding may include dry molding and/or hot pressing.

In an embodiment, the step of (dry) molding or hot pressing the layer structure comprises shearing or pressing the layer structure (into a desired 3D shape) at a temperature of from 50 to 260 °C, such as from 100 to 250 °C, in particular from 110 to 240 °C, and at a pressure of from 1 to 200 bar, such as from 10 to 180 bar, in particular from 30 to 150 bar. By taking this measure, the layer structure is not only deformed into the desired shape, but also a compaction of the material of the layer structure, in particular of the (typically fluffy) non-woven air-laid material, may be achieved resulting in increased mechanical strength and/or barrier properties. Moreover, by application of heat and/or pressure, crosslinking reactions or other modifications of the material (for instance in case of PLA) may occur within the layer structure which may increase the mechanical integrity and stability.

In a second aspect, the present invention relates to a (biodegradable, compostable) (single-use, single-serving, disposable) three-dimensionally (3D) shaped product obtainable (e.g. obtained) by a method as described herein.

In a third aspect, the present invention relates to a (biodegradable, compostable) (single-use, single-serving, disposable) three-dimensionally (3D) shaped product comprising a layer structure comprising a carrier layer (comprising fibers) and a non-woven air-laid material comprising fibers, and an additive in and/or on the layer structure, in particular in and/or on the carrier layer and/or in and/or on the non-woven air-laid material. The three-dimensionally shaped product may be obtainable (e.g. obtained) by a method as described herein. Further details about the three-dimensionally shaped product, the layer structure, the carrier layer, the non-woven air-laid material and the additive can be found above in the context of the first aspect.

The present invention is further described by the following drawings, which are solely for the purpose of illustrating specific embodiments, and are not construed as limiting the scope of the invention in any way.

### DETILED DESCRIPTION OF THE DRAWINGS

The illustration in the drawings is schematical and not necessarily drawn to scale. In different drawings, similar or identical elements are provided with the same reference signs.

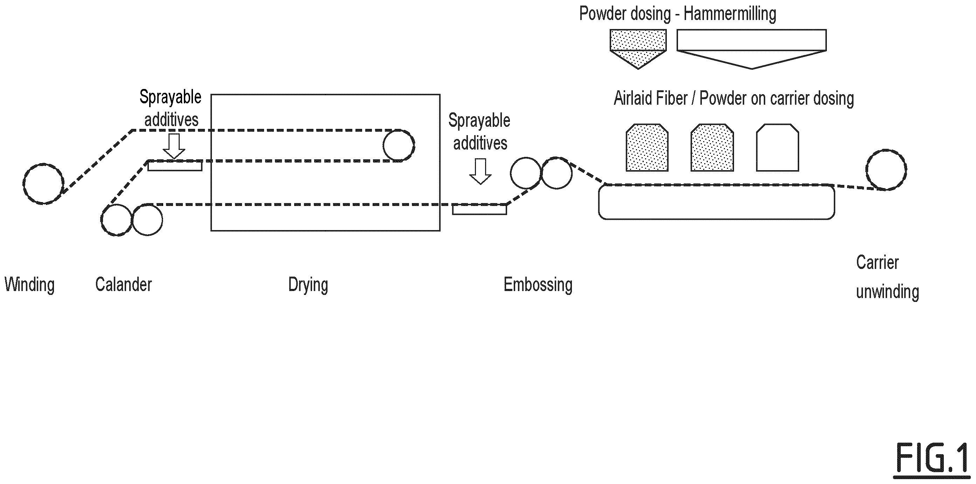

**Fig. 1** schematically illustrates an equipment for preparing a layer structure by applying a non-woven air-laid material on a carrier layer and applying an additive according to an exemplary embodiment. The process for preparing the layer structure takes place from the right to the left in the depicted equipment.

Beginning on the right side of Fig. 1, a carrier layer, which may be formed in advance by a spunlace process, a meltblown process or a spunbond process, is provided on a reel. The carrier layer is unwound from the reel and passed through an airlay section, where a fiber composition that may have been subjected to hammermilling in advance is airlaid on the carrier layer, optionally together with an additive in the form of a powder, to form a non-woven air-laid material on the carrier layer and thus to give a layer structure comprising the carrier layer and a layer of the non-woven air-laid material. The layer structure may be subjected to embossing, followed by spraying a dispersion or solution comprising additives. After a first drying, the layer structure may be subjected to a calander, followed by spraying another dispersion or solution comprising additives, which may be the same or different as the one before. After a further drying, the layer structure may by wound on a reel.

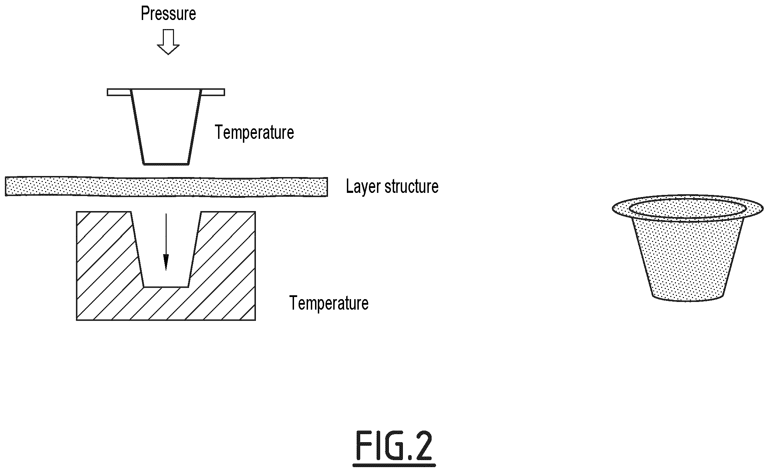

**Figs. 2A and 2B** schematically illustrate a one-step molding process and the resulting three-dimensionally shaped product according to an exemplary embodiment.

In Fig. 2A, a layer structure is placed between the male and female portions of a die mold. Upon application of pressure and elevated temperature, a three-dimensionally shaped product is formed primarily by stretching the layer structure. After cutting, the three-dimensionally shaped product is obtained; in the embodiment depicted in Fig. 2B, a capsule body.

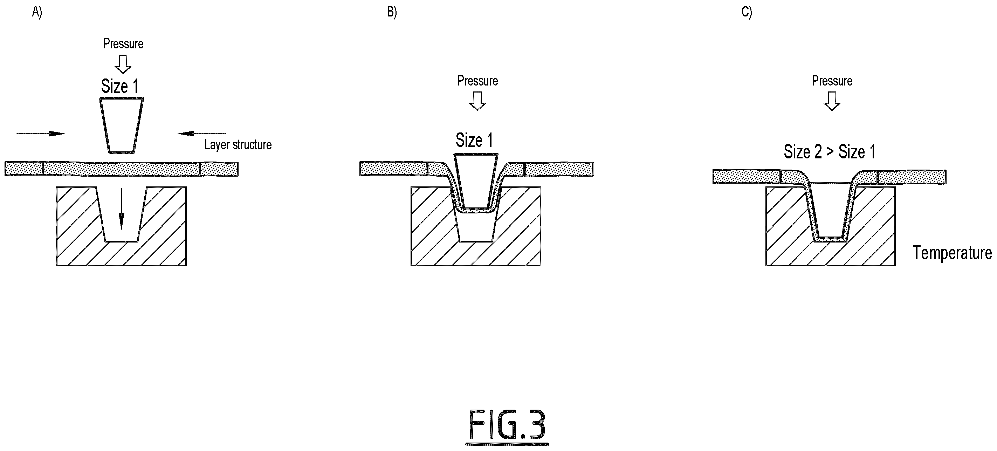

**Figs. 3A to 3C** schematically illustrate a two-step molding process according to an exemplary embodiment.

In Fig. 3A, a layer structure is placed between the male and female portions of a die mold. In a two-step process, as shown in Figs. 3B and 3C, a three-dimensionally shaped product is formed by stretching and fiber web entrainment upon application of pressure and elevated temperature.

**Figs. 4A to 4E** schematically illustrate a multi-step molding process according to an exemplary embodiment.

As shown in Fig. 4A, prior to molding the layer structure is dried to a moisture of less than 1 wt.-% to avoid blistering of the layer structure in the subsequent molding process. The further process steps as shown in Figs. 4A to 4C are similar to those as shown in Figs. 3A to 3C and in particular involve stretching and fiber web entrainment upon application of pressure and elevated temperature. Subsequently, a film comprising for instance a biopolymer or another additive is placed between the male and female portions of a die mold, wherein the male portion at this step has a larger size ("Size 2") than the male portion ("Size 1") as previously used for stretching the layer structure (Fig. 4D). Upon application of elevated temperature, but at a pressure lower than in the step of stretching the layer structure, the film is applied onto the molded layer structure (Fig. 4E). By applying the film with a lower pressure (for instance < 30 bar), uniformity of the film may be improved.

While the present invention has been described in detail by way of specific embodiments and examples, the invention is not limited thereto and various alterations and modifications are possible, without departing from the scope of the invention.

## Claims

1. A method for producing a three-dimensionally shaped product, the method comprising the steps of:
providing a carrier layer;
providing a non-woven air-laid material on the carrier layer to give a layer structure comprising the carrier layer and the non-woven air-laid material;
applying an additive to the layer structure;
molding the layer structure.

2. The method according to claim 1, wherein the carrier layer comprises at least one non-woven selected from the group consisting of a spunlaced non-woven, a meltblown non-woven and a spunbonded non-woven.

3. The method according to claim 1 or 2, wherein the step of providing a non-woven air-laid material on the carrier layer comprises air-laying a fiber composition on the carrier layer.

4. The method according to claim 3, wherein the fiber composition comprises cellulosic pulp fibers and/or biopolymer fibers.

5. The method according to any one of the preceding claims, wherein the layer structure, in particular the non-woven air-laid material, has a moisture of less than 10 %, in particular less than 1 %, before the step of applying an additive to the layer structure.

6. The method according to any one of the preceding claims, wherein the additive is applied as at least one of a dispersion, a solution, a powder, a film and a fiber.

7. The method according to any one of the preceding claims, wherein the step of applying an additive to the layer structure comprises at least one of spraying, coating, casting, applying by a size press, dry impregnating, blending, laminating and extruding.

8. The method according to any one of the preceding claims, wherein the step of applying an additive to the layer structure comprises at least one of the following:
- spraying and/or coating a dispersion or solution comprising the additive on at least one side of the layer structure,
- dry impregnating the layer structure, in particular the carrier layer and/or the non-woven air-laid material, with a powder comprising the additive,
- applying a film comprising the additive on at least one side of the layer structure,
- adding a fiber to a fiber composition used for providing the layer structure, in particular the carrier layer and/or the non-woven air-laid material.

9. The method according to claim 6 or 8, wherein the dispersion comprises water and further comprises at least one of biopolymer particles, cellulosic particles and cellulose derivatives.

10. The method according to any one of claims 6, 8 or 9, wherein the solution comprises at least one of polyamido-amine epichlorohydrin (PAAE), carboxymethyl cellulose (CMC), starch and a polyvalent acid.

11. The method according to any one of claims 6 or 8 to 10, wherein the powder comprises at least one of carboxymethyl cellulose (CMC), starch, lignin, alginate, microfibrillated cellulose (MFC) and a biopolymer.

12. The method according to any one of the preceding claims, wherein the step of molding the layer structure comprises shearing or pressing the layer structure at a temperature of from 50 to 260 °C and at a pressure of from 1 to 200 bar.

13. A three-dimensionally shaped product obtainable by a method according to any one of claims 1 to 12.

14. A three-dimensionally shaped product comprising
a layer structure comprising
a carrier layer;
a non-woven air-laid material comprising fibers,
an additive in and/or on the layer structure.

15. The three-dimensionally shaped product according to claim 13 or 14, wherein the three-dimensionally shaped product is selected from the group consisting of a container, such as tea or coffee capsules, cutlery, such as spoons, and planter, such as plant pots.
